Europäisches Patentamt

(19) European Patent Office  (11) Numéro de publication : **0 013 209**

Office européen des brevets  **B1**

(12) **FASCICULE DE BREVET EUROPÉEN**

(45) Date de publication du fascicule du brevet :
30.09.81

(21) Numéro de dépôt : **79401000.9**

(22) Date de dépôt : **11.12.79**

(51) Int. Cl.³ : **F 02 K   9/10**

(54) Chargement pyrotechnique à faible durée de combustion comprenant des plaques de propergol inclinées et des déflecteurs, propulseur utilisant un tel chargement et plaque de propergol à utiliser dans un tel chargement.

(30) Priorité : **28.12.78 FR 7836724**

(43) Date de publication de la demande :
**09.07.80 (Bulletin 80/14)**

(45) Mention de la délivrance du brevet :
**30.09.81 Bulletin 81/39**

(84) Etats contractants désignés :
**BE CH DE FR GB IT SE**

(56) Documents cités :
**DE - B - 1 170 714**
**DE - B - 1 231 486**
**FR - A - 1 015 763**
**FR - A - 1 180 590**
**FR - A - 2 074 801**
**FR - A - 2 359 981**
**US - A - 2 510 147**
**US - A - 3 048 112**

(73) Titulaire : **SOCIETE NATIONALE DES POUDRES ET EXPLOSIFS**
**12, quai Henri IV**
**F-75181 PARIS CEDEX 04 (FR)**

(72) Inventeur : **Dalet, Francis**
**Les Hameaux de Perrin**
**F-33370 Tresses (FR)**

Imprimerie Jouve, 17, rue du Louvre, 75001 Paris, France

EP 0 013 209 B1

Chargement pyrotechnique à faible durée de combustion comprenant des plaques de propergol inclinées et des déflecteurs, propulseur utilisant un tel chargement et plaque de propergol à utiliser dans un tel chargement

L'invention concerne essentiellement un chargement pyrotechnique à faible durée de combustion destiné notamment à être utilisé dans un propulseur d'accélération d'un engin autopropulsé tel qu'un missile ou une roquette, ce chargement comprenant un ensemble de plaques de propergol solide disposées sensiblement parallèlement les unes aux autres et ménageant au moins un canal d'évacuation des gaz de combustion en direction de la tuyère du propulseur, et l'invention concerne accessoirement, d'une part un propulseur d'un engin autopropulsé utilisant un tel chargement pyrotechnique, et d'autre part une plaque de propergol particulière permettant de réaliser un tel chargement.

Les chargements pyrotechniques comprenant un empilement de plaques de propergol sont connus et, par exemple, le brevet français 2 359 981 décrit un chargement pyrotechnique constitué de rondelles planes de propergol qui sont disposées autour d'un tube support central et qui sont traversées par des tiges, s'étendant parallèlement au tube support, et comportant des rondelles d'espacement servant d'entretoises aux rondelles de propergol. Le canal longitudinal d'évacuation des gaz de combustion est disposé à la périphérie de ce chargement et présente une section croissante, de l'amont situé vers le fond avant du propulseur, vers l'aval situé vers la tuyère de poussée annulaire, cette section croissante étant obtenue par la diminution progressive du diamètre extérieur des rondelles de l'amont vers l'aval, et par la diminution corrélative du carter multiperforé de la chambre de combustion qui est placé à l'intérieur d'un tube de lancement. De tels chargements pyrotechniques, présentant des plaques planes disposées selon des plans transverses du propulseur, entraînent des perturbations dans l'écoulement des gaz de combustion, puisque l'écoulement de ces gaz est initialement radial entre les plaques de propergol, puis devient longitudinal dans le canal d'écoulement ; ces perturbations diminuent le rendement propulsif du chargement pyrotechnique et nécessitent des aménagements complémentaires tels que le renforcement du tube de lancement et l'utilisation d'un carter multiperforé

Un second exemple de chargements pyrotechniques comprenant un empilement de plaques de propergol est décrit dans le brevet des Etats-Unis 3 048 112. Selon ce brevet, en considérant une section longitudinale du chargement, les plaques de propergol sont inclinées vers le canal longitudinal central d'évacuation des gaz de combustion en direction de la tuyère du propulseur, mais ces plaques de forme générale tronconique sont munies de nombreuses entailles ou perforations qui affaiblissent leur résistance mécanique notamment en fin de combustion et perturbent l'écoulement des gaz de combustion durant toute la combustion, de telles fentes étant cependant nécessaires afin d'équilibrer les pressions locales de part et d'autre d'une même plaque pour éviter les ruptures de ces plaques.

La présente invention a pour but de limiter les perturbations de l'écoulement des gaz de combustion tout en supprimant les ruptures de plaques de propergol, et ce but est atteint par la combinaison, d'une part de plaques de propergol qui sont inclinées vers le canal longitudinal, et d'autre part de déflecteurs qui sont disposés sensiblement parallèlement aux plaques de propergol et qui présentent dans une section longitudinale du chargement une longueur égale ou supérieure à la longueur des plaques de propergol, ce qui permet d'une part d'orienter les gaz de combustion vers la tuyère du propulseur et d'autre part de protéger l'extrémité libre de ces plaques de propergol puisque au cours de la combustion, les extrémités de ces déflecteurs, qui sont situées vers le canal longitudinal d'évacuation, dépassent les extrémités correspondantes des plaques de propergol.

Plus particulièrement les plaques de propergol sont des éléments géométriques de révolution puisque les propulseurs présentent généralement une forme cylindrique, ces plaques de propergol pouvant être notamment des éléments géométriques présentant une enveloppe conique, et selon l'invention ces éléments géométriques sont munis de nervures sensiblement disposées selon des génératrices. Cependant, lorsque l'invention est utilisée à la réalisation de chargements pyrotechniques particuliers tels que les chargements utilisés dans les générateurs de gaz à durée de fonctionnement très brève, les plaques de propergol peuvent être planes et inclinées.

Les plaques de propergol sont avantageusement toutes de forme identique pour les chargements de faible longueur, et pour les chargements de grande longueur les plaques de propergol sont avantageusement disposées en séries, toutes les plaques d'une même série étant de forme identique. Lorsque plusieurs plaques de propergol sont en contact mutuel, elles sont avantageusement munies de nervures déterminant leur espacement, et ces nervures sont disposées sensiblement parallèlement à l'écoulement gazeux qui se forme entre ces plaques.

Les déflecteurs peuvent être des pièces distinctes des plaques de propergol et être intercalés entre ces plaques de propergol, mais ils peuvent également être solidaires, soit de toutes les plaques de propergol, soit de certaines de ces plaques. Les déflecteurs devant de plus résister à l'écoulement des gaz de combustion, ils sont avantageusement rendus solidaires de la structure mécanique du chargement pyrotechnique et peuvent avantageusement être en appui mutuel.

Selon une première variante de réalisation, le canal longitudinal d'évacuation des gaz est disposé à la périphérie du chargement qui est destiné à être utilisé dans un propulseur à tuyère annulaire, mais selon une autre variante de réalisation, le canal longitudinal est interne au chargement qui est alors destiné à être utilisé dans un propulseur à tuyère centrale.

Les avantages obtenus grâce à cette invention consistent essentiellement en ce que les écoulements gazeux qui se forment entre les plaques de propergol ne sont pas dirigés transversalement par rapport à la direction d'éjection de ces gaz au travers de la tuyère du propulseur équipé de ce chargement, mais sont au contraire dirigés obliquement vers cette tuyère, ce qui limite considérablement les perturbations de l'écoulement gazeux. La protection de l'extrémité des plaques de propergol située vers le canal longitudinal d'évacuation des gaz de combustion est assurée par les déflecteurs qui ont un rôle d'orientation et de positionnement des différents écoulements gazeux et n'ont préférentiellement aucun rôle d'élément de tuyère, cette protection permettant d'éviter toute rupture intempestive des plaques de propergol qui pourrait également perturber l'écoulement gazeux et réduire le rendement propulsif du chargement.

Dans ce qui suit, l'invention est exposée plus en détail à l'aide de deux dessins représentant deux modes d'exécution particuliers.

La figure 1 représente un propulseur d'accélération à tuyère annulaire et correspond, dans sa partie gauche à une demi-coupe longitudinale du propulseur complet, et dans sa partie droite à une demi-coupe du carter, les éléments pyrotechniques étant retirés.

La figure 2 représente une coupe longitudinale partielle d'un propulseur à tuyère centrale.

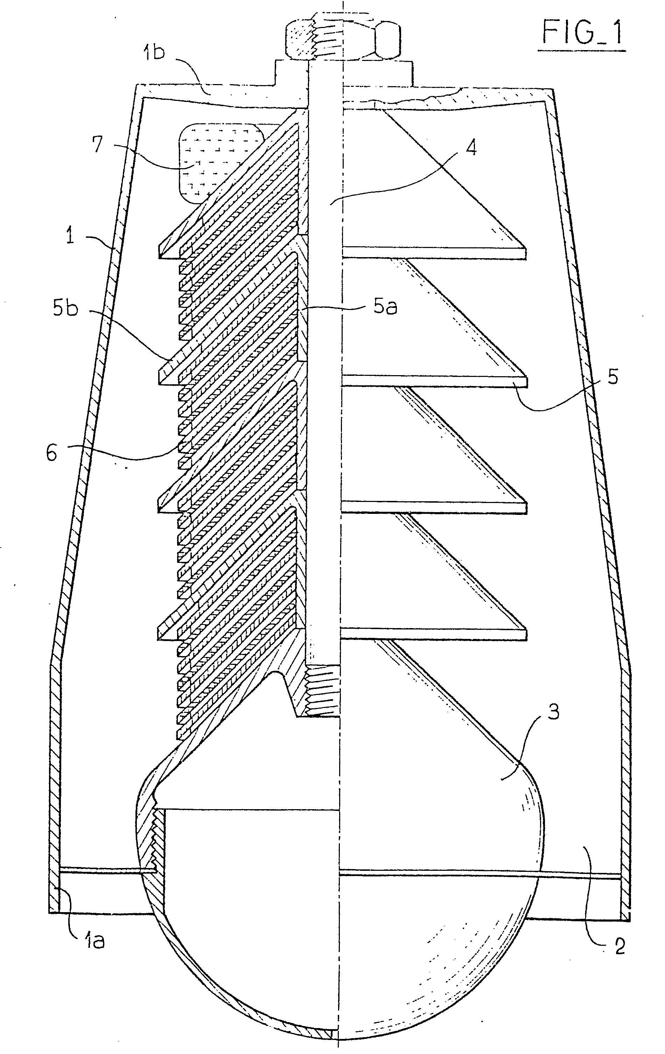

Selon la figure 1, le chargement pyrotechnique propulsif conforme à l'invention est placé dans un propulseur d'accélération dont le carter 1 est partiellement tronconique, la partie cylindrique aval 1a de ce carter constituant l'élément externe de la tuyère annulaire 2 qui est limitée intérieurement par le bulbe central 3 solidaire du fond amont 1b du carter par l'intermédiaire du tirant central 4. Ce tirant permet le centrage des déflecteurs 5 constitués d'une partie cylindrique 5a de centrage servant d'entretoise, et d'une partie active conique 5b sur laquelle repose la pile de rondelles de propergol 6 ; chacune de ces rondelles de propergol présente une enveloppe conique et est constituée par une plaque perforée qui est mise en forme de tronc de cône et qui présente des nervures déterminant l'espacement entre les plaques de propergol, ces nervures étant disposées selon des génératrices intérieures et extérieures du tronc de cône. L'espace disponible entre le fond amont 1b et le déflecteur amont, peut être avantageusement utilisé pour placer l'allumeur annulaire 7 du chargement dont les fils de mise à feu ne sont pas représentés.

Selon une première variante d'exécution réalisable à partir de l'exemple décrit par rapport à la figure 1, il est possible d'utiliser un allumeur central placé dans un tirant creux comportant des ouvertures latérales de mise à feu, mais il est alors avantageux que les déflecteurs soient réduits à leurs surfaces actives coniques 5b qui sont engagés à leurs périphéries dans des crans de calage ménagés sur trois plaques d'appui solidaires du carter, ces plaques étant disposées dans trois plans longitudinaux axiaux répartis à 120 degrés. Selon une seconde variante d'exécution réalisable à partir de l'exemple décrit à la figure 1, le carter peut être réduit au fond amont 1b dont le diamètre extérieur doit alors être porté sensiblement au même diamètre que le diamètre interne de la partie cylindrique 1a de manière à obtenir les mêmes conditions thermodynamiques de combustion, un tel propulseur d'accélération devant alors être tiré à partir d'un tube de lancement cylindrique, qui présente un diamètre interne égal au diamètre interne de la partie cylindrique 1a et qui résiste à la pression, puisque la tuyère annulaire sera alors déterminée par le passage existant entre le bulbe central 3 et la surface interne de ce tube de lancement.

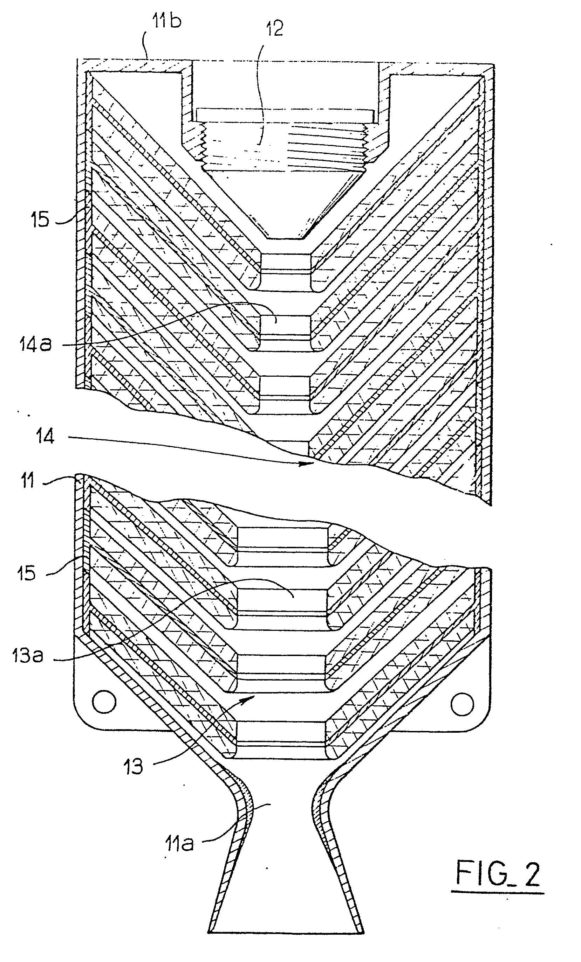

Selon la figure 2, le chargement pyrotechnique propulsif conforme à l'invention est placé dans un propulseur cylindrique 11 qui comporte une tuyère centrale 11a dans la zone aval, et dont le fond amont 11b est adapté pour recevoir un allumeur central 12. Le chargement en lui-même est constitué par un empilement de rondelles coniques comportant un déflecteur qui constitue une armature métallique et qui porte deux couches de propergol situées de chaque côté de celle-ci. Trois types de rondelles différentes sont utilisées :

— les rondelles coniques 13 situées dans la zone aval sont réalisées à partir d'un propergol à vitesse de combustion élevée et comportent une ouverture centrale 13a dont la section est égale au double de la section de la tuyère centrale,

— les rondelles coniques (non représentées) situées dans la zone moyenne sont réalisées à partir d'un propergol à vitesse de combustion modérée et comportent une ouverture centrale dont la section est égale à une fois et demie la section de la tuyère centrale,

— les rondelles coniques 14 situées dans la zone amont sont réalisées à partir du même propergol que celui utilisé à la réalisation des rondelles coniques de la zone moyenne, et comportent une ouverture centrale 14a dont la section est légèrement inférieure à la section de la tuyère centrale.

Toutes les rondelles coniques sont en appui mutuel au moyen des viroles externes 15 des armatures métalliques dont l'alésage central est d'un diamètre égal au diamètre de l'ouverture centrale de la rondelle conique. Cette armature métallique peut ainsi jouer le rôle de déflecteur dès le début de la combustion qui découvrira progressivement le bord de l'alésage central au fur et à mesure de l'augmentation de la perforation centrale des plaques de propergol.

## Revendications

1. Chargement pyrotechnique, destiné notamment à être utilisé dans un propulseur (1 ; 11) , comprenant un ensemble de plaques de propergol solide (6 ; 13, 14), disposées sensiblement parallèlement les unes aux autres et ménageant au moins un canal longitudinal (2 ; 13a, 14a) d'évacuation des gaz de combustion en direction de la tuyère du propulseur (1a ; 11a), ces plaques de propergol étant inclinées vers ce canal longitudinal (2 ; 13a, 14a), caractérisé en ce qu'il comporte des déflecteurs (5 ; 13, 14) qui sont disposés sensiblement parallèlement aux plaques de propergol (6 ; 13, 14) et qui présentent, dans une section longitudinale du chargement, une longueur égale ou supérieure à la longueur des plaques de propergol.

2. Chargement pyrotechnique selon la revendication 1, caractérisé en ce que les plaques de propergol (6) sont des éléments géométriques de révolution munis de nervures sensiblement disposées selon des génératrices.

3. Chargement pyrotechnique selon l'une des revendications 1 ou 2, caractérisé en ce que les déflecteurs (5) sont des pièces distinctes des plaques de propergol (6) et sont intercalés entre les plaques de propergol.

4 Chargement pyrotechnique selon l'une des revendications 1 ou 3, caractérisé en ce que les déflecteurs (5 ; 13, 14) sont en appui mutuel.

5. Chargement pyrotechnique selon la revendication 1, caractérisé en ce que le canal longitudinal (2) d'évacuation des gaz est disposé à la périphérie de ce chargement.

6. Propulseur d'un engin autopropulsé muni d'un chargement pyrotechnique, caractérisé en ce que le chargement pyrotechnique est conforme à l'une des revendications précédentes.

7. Plaque de propergol d'un chargement pyrotechnique, caractérisé en ce qu'elle est conforme à la revendication 2.

## Claims

1. Pyrotechnic charge principally intended for use in a propulsion device (1, 11) comprising an assembly of substantially mutually parallel plates of solid propellant (6, 13, 14) providing at least one longitudinal gas evacuation channel (2, 13a, 14a) in the direction of the thrust nozzle (14, 11a) of the propulsion device, the plates of propellant being inclined with respect to the longitudinal channel (2, 13a, 14a), characterised in that the charge possesses deflectors (5, 13, 14) disposed substantially parallel to the plates of propellant (6, 13, 14) and having a length, in longitudinal section of the charge, equal to or greater than the length of the propellant plates.

2. Pyrotechnic charge according to claim 1, characterised in that the propellant plates (6) are geometrical solids of revolution furnished with ribs disposed substantially along the generatrices.

3. Pyrotechnic charge according to claim 1 or 2, characterised in that the deflectors (5) are members distinct from and sandwiched between the propellant plates (6).

4. Pyrotechnic charge according to claim 1 or 3, characterised in that the deflectors (5, 13, 14) support each other.

5. Pyrotechnic charge according to claim 1 characterised in that the longitudinal gas evacuation channel (2) is disposed around the periphery of the charge.

6. Propulsion device for a self-propelled engine equipped with a pyrotechnic charge, characterised in that the pyrotechnic charge is in accordance with one of the preceding claims.

7. A plate of propellant of a pyrotechnic charge, characterised in that it is in accordance with claim 2.

## Ansprüche

1. Pyrotechnische Ladung insbesondere für Treibsätze (1, 11) mit einer Einheit von Platten aus einem festen Propergol (6, 13, 14), die im wesentlichen zueinander parallel angeordnet sind und mindestens einen Längskanal (2, 13a, 14a) zur Abführung der Brenngase in Richtung der Düse des Treibsatzes (1a, 11a) aufweisen, wobei die Propergolplatten zum Längskanal (2, 13a, 14a) geneigt vorgesehen sind, dadurch gekennzeichnet, daß sie Deflektoren (5, 13, 14) aufweist, die im wesentlichen parallel zu den Propergolplatten (6, 13, 14) vorgesehen sind und im Längsschnitt gleiche oder größere Länge als die Propergolplatten besitzen.

2. Pyrotechnische Ladung nach Anspruch 1, dadurch gekennzeichnet, daß die Propergolplatten (6) rotationssymmetrische geometrische Körper sind, die Rillen aufweisen, die etwa entsprechend den Erzeugenden vorgesehen sind.

3. Pyrotechnische Ladung nach Anspruch 1 oder 2, dadurch gekennzeichnet, daß die Deflektoren (5) von den Propergolplatten (6) verschieden und zwischen ihnen eingeschaltet sind.

4. Pyrotechnische Ladung nach einem der Ansprüche 1 bis 3, dadurch gekennzeichnet, daß die Deflektoren (5, 13, 14) wechselseitig abgestützt sind.

5. Pyrotechnische Ladung nach Anspruch 1, dadurch gekennzeichnet, daß der Längskanal (2) zur Abführung der Brenngase am Umfang der Ladung vorgesehen ist.

6. Treibsatz für Raketentriebwerke mit einem pyrotechnischen Treibsatz, gekennzeichnet durch eine pyrotechnische Ladung nach einem der vorhergehenden Ansprüche.

7. Propergolplatte für pyrotechnische Ladungen, dadurch gekennzeichnet, daß sie gemäß Anspruch 2 ausgebildet ist.

FIG_1

FIG_2